# EUROPÄISCHE PATENTANMELDUNG

(11) **EP 3 816 739 A1**
(43) Veröffentlichungstag der Anmeldung: **05.05.2021**
(21) Anmeldenummer: 19205811.3
(22) Anmeldetag: 29.10.2019
(51) Int. Cl.: G05B 15/02

(54) **INDUKTIONSSPANNUNGSBASIERTE STEUERUNG EINES SENSORNETZES**

(71) Anmelder: Siemens Aktiengesellschaft, 80333 München (DE)
(72) Erfinder: Tacke, Dominik, 90562 Heroldsberg (DE); Bormann, Ulf, 90518 Altdorf (DE); Scheibner, Dirk, 90473 Nürnberg (DE); Schimmer, Jürgen, 90473 Nürnberg (DE); Villnow, Michael, 90765 Fürth (DE)

(57) **Zusammenfassung**

Die Erfindung gibt ein Verfahren zur Steuerung eines Sensornetzes (2) mit Sensorknoten (3) eines technischen Systems (1) an. Das Verfahren weist die folgenden Schritte auf:
- ein Deaktivieren (S1) der Sensorknoten (3) des Sensornetzes (2),
- ein Ermitteln (S2) einer Induktionsspannung (Uₑ) in einer Spule (4) des Sensorknotens (3) und/oder einer Spule (4) des Sensornetzes (2), wobei die Induktionsspannung (Uₑ) durch ein durch das technische System (1) erzeugtes Magnetfeld erzeugt wird,
- ein Vergleichen (S3) der ermittelten Induktionsspannung (Uₑ) mit einer Referenzspannung (U_{R}) und
- ein Aktivieren (S4) der Sensorknoten (3) in Abhängigkeit des Vergleichens.

Außerdem gibt die Erfindung ein Sensornetz (2) eines technischen Systems (1) an.

## Beschreibung

### HINTERGRUND DER ERFINDUNG

### Gebiet der Erfindung

Die vorliegende Erfindung betrifft ein Verfahren zur Steuerung eines Sensornetzes mit Sensorknoten eines technischen Systems. Die Erfindung betrifft des Weiteren ein Sensornetz. Die Erfindung kann insbesondere Steuerung eines Sensornetzes mit Sensorknoten eines technischen Systems verwendet werden.

### Beschreibung des Stands der Technik

Es ist von Vorteil Maschinen und technischen Systemen kontinuierlich oder zyklisch zu überwachen. Im Rahmen der Digitalisierung werden zunehmend physikalische Größen von Maschinen und technischen Systemen erfasst. Die Messung von physikalischen Größen wie Temperatur, Vibration, Druck, Feuchte etc. wird zunehmend durch batteriebetriebenen Sensorknoten mit drahtloser Kommunikation (meist Bluetooth Low Energy (BLE)) realisiert. Die Sensorknoten erfassen die Messdaten zyklisch. Um Energie zu sparen, befindet sich der Sensorknoten zwischen den zyklischen Messungen in einem Ruhezustand. Dabei sind die meisten Funktionen deaktiviert, wodurch keine Messwerterfassung möglich ist. Falls im Ruhezustand ein plötzliches Ereignis auftritt, welches von großer Bedeutung ist und damit ein wichtiges messtechnisches Ereignis darstellt, kann dieses nicht vom Sensorknoten erfasst werden.

### ZUSAMMENFASSUNG DER ERFINDUNG

Die Aufgabe der Erfindung besteht darin, eine Lösung für eine verbesserte Überwachung von technischen Systemen anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein Sensornetz mit Sensorknoten eines technischen Systems dahingehend zu steuern, dass die Sensorknoten nur dann aktiviert sind, wenn ein von dem technischen System erzeugtes Magnetfeld in Form einer Induktionsspannung ermittelbar ist. Zusätzlich lässt sich das Aktivieren der Sensorknoten frequenzselektiv ausführen.

Die Erfindung beansprucht ein Verfahren zur Steuerung eines Sensornetzes mit Sensorknoten eines technischen Systems, mit den Schritten:
- ein Deaktivieren der Sensorknoten des Sensornetzes,
- ein Ermitteln einer Induktionsspannung in einer Spule (beispielsweise in einer Luftspule) des Sensorknotens und/oder des Sensornetzes, wobei die Induktionsspannung durch ein durch das technische System erzeugtes Magnetfeld erzeugt wird,
- ein Vergleichen der ermittelten Induktionsspannung mit einer Referenzspannung und
- ein Aktivieren der Sensorknoten in Abhängigkeit des Vergleichens (zum Beispiel durch einen Reaktivierungspuls).

Es wird eine Schaltung / Steuerung eines Sensornetzes vorgeschlagen, welche eine Spule (beispielsweise eine Luftspule, eine Spule mit einem Weicheisenkern oder eine Spule mit einem Dielektrikum) als Sensorelement verwendet. Ein Magnetfeld, welches die Spule durchdringt, induziert eine Spannung in der Spule, welche als Induktionsspannung bezeichnet wird. Die Induktionsspannung kann zum Beispiel mit Hilfe eines Komparators bzw. Schmitt-Triggers mit einer Referenzspannung verglichen werden. Überschreitet die Induktionsspannung die Referenzspannung, so kann der Ausgang des Schmitt-Triggers von einem niedrigen auf einen hohen Signalpegel umgeschaltet werden, so dass ein Interrupt an einem Mikrocontroller ausgelöst werden kann.

Das Vergleichen der ermittelten Induktionsspannung mit der Referenzspannung kann analog oder digital erfolgen. Digital kann das Vergleichen der ermittelten Induktionsspannung mit der Referenzspannung beispielsweise erfolgen indem die induzierte Spannung digitalisiert und mathematisch mit einem Zahlenwert, wobei der Zahlenwert die Referenzspannung repräsentiert, vergleichen wird.

In einer weiteren Ausführung weist das erfindungsgemäße Verfahren den folgenden weiteren Schritt auf: Ein Verstärken der Induktionsspannung durch einen Operationsverstärker nach dem Ermitteln der Induktionsspannung und vor dem Vergleichen der Induktionsspannung mit der Referenzspannung. Ein Verstärken der Induktionsspannung hat den Vorteil, dass die Induktionsspannung dadurch leichter ermittelbar ist.

In einer weiteren Ausführung weist das erfindungsgemäße Verfahren den folgenden weiteren Schritt auf: Ein Filtern der Induktionsspannung mit einem geeigneten Filter (z.B. Tiefpassfilter, Hochpassfilter oder Bandpassfilter) auf einen vorgegebenen Frequenzbereich nach dem Ermitteln der Induktionsspannung und vor dem Vergleichen der Induktionsspannung mit der Referenzspannung. Ein Filtern der Induktionsspannung hat den Vorteil, dass Frequenzbereiche, die im vorhandenen technischen System besonders relevant sind, gewählt werden können.

In einer weiteren Ausführung weist das erfindungsgemäße Verfahren den folgenden weiteren Schritt auf: Ein Filtern der Induktionsspannung mit einem Filter auf einen vorgegebenen Frequenzbereich nach dem Verstärken der Induktionsspannung durch den Operationsverstärker und vor dem Vergleichen der Induktionsspannung mit der Referenzspannung. Ein Filtern der Induktionsspannung hat den Vorteil, dass Frequenzbereiche, die im vorhandenen technischen System besonders relevant sind, gewählt werden können.

In einer weiteren Ausführung wird der vorgegebene Frequenzbereich in Abhängigkeit von Charakteristika des technischen Systems gewählt.

Durch den Filter ist es möglich, den Reaktivierungspuls (das Aktivieren der Sensorknoten in Abhängigkeit des Vergleichens) frequenzabhängig zu gestalten. Soll der Sensorknoten nur reaktiviert / aktiviert werden, wenn das zu überwachende technische Systeme oder eine Maschine des technischen Systems ein charakteristisches Magnetfeld in einem bestimmten Frequenzbereich emittiert, so kann der Filter schmalbandig um den entsprechenden Frequenzbereich dimensioniert werden. Alle übrigen Frequenzen werden durch den Filter herausgefiltert, wodurch die Sensorknoten nicht reaktiviert / aktiviert werden.

In einer weiteren Ausführung ist das Vergleichen durch eine Vergleichseinheit durchführbar, wobei die Vergleichseinheit ein Komparator und / oder ein Schmitt-Trigger ist.

In einer weiteren Ausführung wird das Reaktivieren der Sensorknoten durchgeführt, wenn die Induktionsspannung größer als die Referenzspannung ist.

In einer weiteren Ausführung erfassen die Sensorknoten Messdaten, wobei die Messdaten mittels einer drahtlosen Kommunikationstechnik (zum Beispiel Bluetooth Low Energy (BLE)) an eine Auswerteeinheit übertragen werden. In der Auswerteeinheit können die Messdaten analysiert werden.

Die Erfindung beansprucht außerdem ein Sensornetz eines technischen Systems, aufweisend:
- Sensorknoten, wobei die Sensorknoten deaktivierbar und aktivierbar sind,
- eine Spule (beispielsweise eine Luftspule), wobei in der Spule eine Induktionsspannung erzeugbar ist, wobei die Induktionsspannung durch ein durch das technische System erzeugtes Magnetfeld erzeugt wird,
- eine Ermittlungseinheit, wobei die Ermittlungseinheit ausgebildet ist, die in der Spule erzeugt Induktionsspannung zu ermitteln,
- eine Vergleichseinheit, wobei die Vergleichseinheit ausgebildet ist, ein Vergleichen der Induktionsspannung mit einer Referenzspannung durchzuführen und
- eine Kontrolleinheit, wobei die Kontrolleinheit ausgebildet ist, eine Deaktivierung und Aktivierung der Sensorknoten des Sensornetzes in Abhängigkeit des Vergleichens durchzuführen.

In einer weiteren Ausführung ist das Sensornetz zur Durchführung eines erfindungsgemäßen Verfahrens ausgebildet.

In einer weiteren Ausführung weisen die Sensorknoten einen elektrischen Energiespeicher auf. Die Sensorknoten können beispielsweise batterie- oder akkubetrieben sein.

In einer weiteren Ausführung weist das technische System Maschinen auf, wobei die Sensorknoten physikalische Größen der Maschinen erfassen.

In einer weiteren Ausführung beinhalten die physikalischen Größen Temperatur, Vibration, Druck und / oder Feuchtigkeit.

Die Erfindung bietet den Vorteil, dass sich Sensorknoten durch eine Deaktivierung in einen Ruhezustand versetzen lassen, sobald ein technisches System und / oder eine (elektrische) Maschine eines technischen Systems ausgeschalten wird. Ein Wiedereinschalten des technischen Systems und / oder der (elektrische) Maschine des technischen Systems kann durch eine in einer Spule induzierte Induktionsspannung ermittelt werden und die Sensorkonten können wieder aktiviert / reaktivieren werden. Die Induktionsspannung wird dabei durch ein von dem technischen System und / oder einer (elektrischen) Maschine eines technischen Systems erzeugtem Magnetfeld erzeugt. Dieses Verfahren trägt essenziell zur Energieeinsparung, zum Beispiel im Batteriebetrieb, bei. Dadurch kann die Batterie-/ Akkulebensdauer deutlich verlängert werden und damit die Kosten für Service stark reduziert werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Ablaufdiagram des erfindungsgemäßen Verfahrens
- Fig. 2: ein Blockdiagram eines Sensornetzes und
- Fig. 3: einen Sensorknoten.

### DETAILLIERTE BESCHREIBUNG DER ERFINDUNG

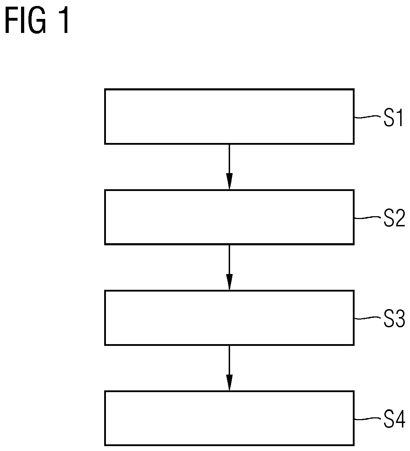

Fig. 1 zeigt ein Ablaufdiagram des erfindungsgemäßen Verfahrens zur Steuerung eines Sensornetzes 2 mit Sensorknoten 3 eines technischen Systems 1. Das Verfahren weist die folgenden Verfahrensschritte auf:
1. Verfahrensschritt S1: ein Deaktivieren der Sensorknoten 3 des Sensornetzes 2,
2. Verfahrensschritt S2: ein Ermitteln einer Induktionsspannung Uₑ in einer Spule 4 (beispielsweise einer Luftspule) eines Sensorknotens 3 und/oder des Sensornetzes 2, wobei die Induktionsspannung Uₑ durch ein durch das technische System 1 erzeugtes Magnetfeld erzeugt wird,
3. Verfahrensschritt S3: ein Vergleichen der ermittelten Induktionsspannung Uₑ mit einer Referenzspannung U_{R} und
4. Verfahrensschritt S4: ein Aktivieren der Sensorknoten 3 in Abhängigkeit des Vergleichens.

Das Verfahren kann außerdem den folgenden weiteren Verfahrensschritt aufweisen: ein Verstärken der Induktionsspannung Uₑ durch einen Operationsverstärker nach dem Ermitteln der Induktionsspannung Uₑ und vor dem Vergleichen der Induktionsspannung Uₑ mit der Referenzspannung U_{R}.

Das Verfahren kann außerdem den folgenden weiteren Verfahrensschritt aufweisen: ein Filtern der Induktionsspannung Uₑ mit einem Filter auf einen vorgegebenen Frequenzbereich nach dem Ermitteln der Induktionsspannung Uₑ oder nach dem Verstärken der Induktionsspannung Uₑ durch den Operationsverstärker und vor dem Vergleichen der Induktionsspannung Uₑ mit der Referenzspannung U_{R}.

Der vorgegebene Frequenzbereich kann dabei in Abhängigkeit von Charakteristika des technischen Systems 1 gewählt werden.

Das Reaktivieren der Sensorknoten 3 wird in Abhängigkeit des Vergleiches der ermittelten Induktionsspannung Uₑ mit der Referenzspannung U_{R} durchgeführt. Wenn die Induktionsspannung (Uₑ) zum Beispiel größer als die Referenzspannung (U_{R}) ist, kann das Reaktivieren der Sensorknoten 3 durchgeführt werden.

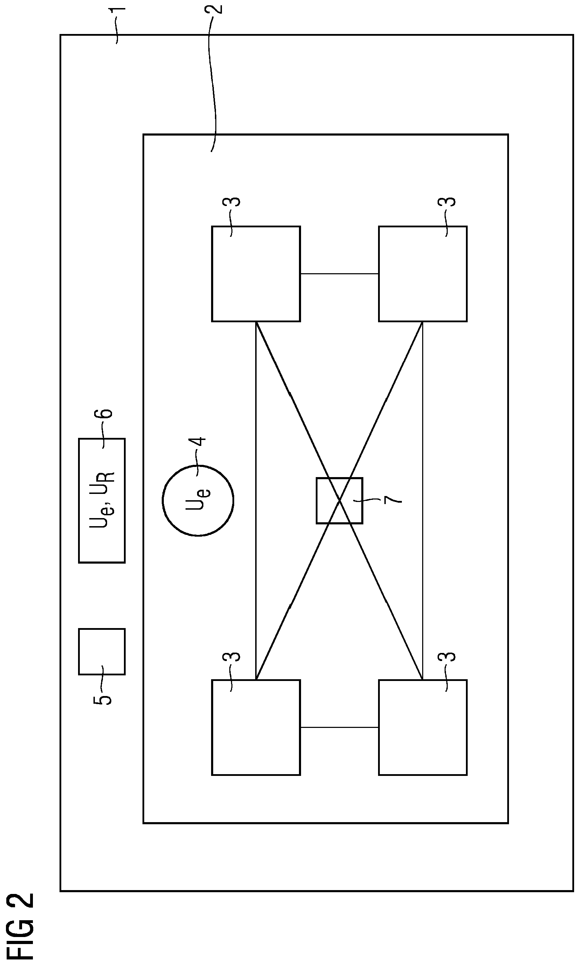

Fig. 2 zeigt ein Blockdiagram eines Sensornetzes 2 eines technischen Systems 1. Das Sensornetzes 2 weist Sensorknoten 3 auf, wobei die Sensorknoten 3 deaktivierbar und aktivierbar sind.

Die Sensorknoten 3 können einen elektrischen Energiespeicher aufweisen.

Die Sensorknoten 3 können Messdaten erfassen, wobei die Messdaten mittels einer drahtlosen Kommunikationstechnik an eine Auswerteeinheit übertragen werden können.

Das Sensornetz 2 (oder einer der Sensorknoten 3) weist außerdem eine Spule 4 auf, wobei in der Spule 4 eine Induktionsspannung Uₑ erzeugbar ist, wobei die Induktionsspannung Uₑ durch ein durch das technische System 1 erzeugtes Magnetfeld erzeugt wird.

Das Sensornetz 2 weist außerdem eine Ermittlungseinheit 5 auf, wobei die Ermittlungseinheit 5 ausgebildet ist, die in der Spule 4 erzeugt Induktionsspannung Uₑ zu ermitteln.

Das Sensornetz 2 weist außerdem eine Vergleichseinheit 6 auf, wobei die Vergleichseinheit 6 ausgebildet ist, ein Vergleichen der Induktionsspannung Uₑ mit einer Referenzspannung U_{R} durchzuführen.

Die Vergleichseinheit 6 kann ein Komparator und / oder ein Schmitt-Trigger sein.

Das Sensornetz 2 weist außerdem eine Kontrolleinheit 7 auf, wobei die Kontrolleinheit 7 ausgebildet ist, eine Deaktivierung und Aktivierung der Sensorknoten 3 des Sensornetzes 2 in Abhängigkeit des Vergleichens durchzuführen.

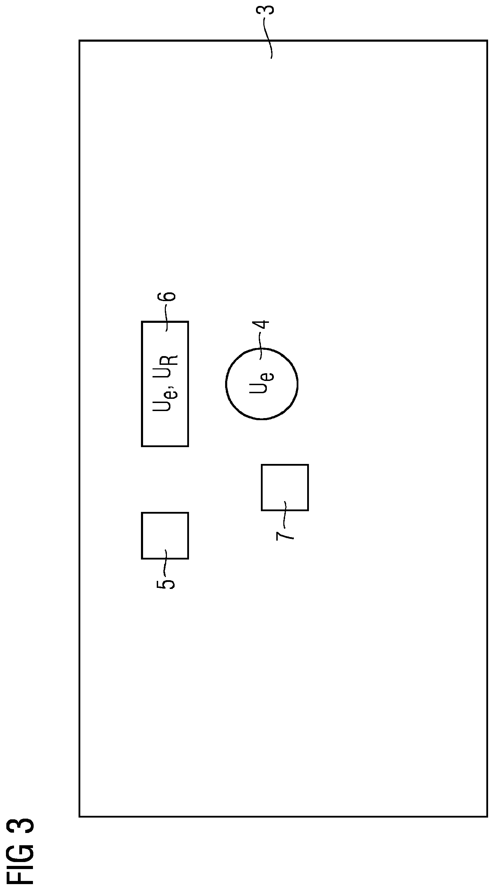

Alternativ können die Spule 4, die Ermittlungseinheit 4, die Vergleichseinheit 6 und die Kontrolleinheit 7 auch direkt in den Sensorknoten 3 ausgebildet/integriert sein (siehe Fig. 3).

Das technische System 1 kann Maschinen aufweisen, wobei die Sensorknoten 3 physikalische Größen der Maschinen erfassen.

Die physikalischen Größen können eine vorliegende Temperatur, eine vorliegende Vibration, einen vorliegenden Druck und / oder eine vorliegende Feuchtigkeit beinhalten.

Fig. 3 zeigt einen Sensorknoten 3. Der Sensorknoten weist eine Spule 4, eine Ermittlungseinheit 4, eine Vergleichseinheit 6 und eine Kontrolleinheit 7 auf. Anders als in Fig. 2 sind die Spule 4, die Ermittlungseinheit 4, die Vergleichseinheit 6 und die Kontrolleinheit 7 direkt im Sensorknoten 3 und nicht im Sensornetz 2 ausgebildet/integriert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: technisches System
- 2: Sensornetz
- 3: Sensorknoten
- 4: Spule
- 5: Ermittlungseinheit
- 6: Vergleichseinheit
- 7: Kontrolleinheit

- S1: 1. Verfahrensschritt, Deaktivieren
- S2: 2. Verfahrensschritt, Ermitteln
- S3: 3. Verfahrensschritt, Vergleiche
- S4: 4. Verfahrensschritt, Aktivieren

- Uₑ: Induktionsspannung
- U_{R}: Referenzspannung

## Patentansprüche

1. Verfahren zur Steuerung eines Sensornetzes (2) mit Sensorknoten (3) eines technischen Systems (1), mit den Schritten:
- ein Deaktivieren (S1) der Sensorknoten (3) des Sensornetzes (2),
- ein Ermitteln (S2) einer Induktionsspannung (Uₑ) in einer Spule (4) eines Sensorknotens (3) und/oder einer Spule (4) des Sensornetzes (2), wobei die Induktionsspannung (Uₑ) durch ein durch das technische System (1) erzeugtes Magnetfeld erzeugt wird,
- ein Vergleichen (S3) der ermittelten Induktionsspannung (Uₑ) mit einer Referenzspannung (U_{R}) und
- ein Aktivieren (S4) der Sensorknoten (3) in Abhängigkeit des Vergleichens.

2. Verfahren nach Anspruch 1,
mit dem weiteren Schritt:
- ein Verstärken der Induktionsspannung (Uₑ) durch einen Operationsverstärker nach dem Ermitteln der Induktionsspannung (Uₑ) und vor dem Vergleichen der Induktionsspannung (Uₑ) mit der Referenzspannung (U_{R}).

3. Verfahren nach Anspruch 1,
mit dem weiteren Schritt:
- ein Filtern der Induktionsspannung (Uₑ) mit einem geeigneten Filter auf einen vorgegebenen Frequenzbereich nach dem Ermitteln der Induktionsspannung (Uₑ) und vor dem Vergleichen der Induktionsspannung (Uₑ) mit der Referenzspannung (U_{R}).

4. Verfahren nach Anspruch 2,
mit dem weiteren Schritt:
- ein Filtern der Induktionsspannung (Uₑ) mit einem geeigneten Filter auf einen vorgegebenen Frequenzbereich nach dem Verstärken der Induktionsspannung (Uₑ) durch den Operationsverstärker und vor dem Vergleichen der Induktionsspannung (Uₑ) mit der Referenzspannung (U_{R}).

5. Verfahren nach Anspruch 3 oder 4,
wobei der vorgegebene Frequenzbereich in Abhängigkeit von Charakteristika des technischen Systems (1) gewählt wird.

6. Verfahren nach einem der vorhergehenden Ansprüche,
**wobei** das Vergleichen durch eine Vergleichseinheit (6) durchführbar ist, wobei die Vergleichseinheit (6) ein Komparator und / oder ein Schmitt-Trigger ist.

7. Verfahren nach einem der vorhergehenden Ansprüche,
**wobei** das Reaktivieren der Sensorknoten (3) durchgeführt wird, wenn die Induktionsspannung (Uₑ) größer als die Referenzspannung (U_{R}) ist.

8. Verfahren nach einem der vorhergehenden Ansprüche,
**wobei** die Sensorknoten (3) Messdaten erfassen, wobei die Messdaten mittels einer drahtlosen Kommunikationstechnik an eine Auswerteeinheit übertragen werden.

9. Sensornetz (2) eines technischen Systems (1), **aufweisend:**
- Sensorknoten (3), wobei die Sensorknoten (3) deaktivierbar und aktivierbar sind,
- eine Spule (4), wobei in der Spule (4) eine Induktionsspannung (Uₑ) erzeugbar ist, wobei die Induktionsspannung (Uₑ) durch ein durch das technische System (1) erzeugtes Magnetfeld erzeugt wird,
- eine Ermittlungseinheit (5), wobei die Ermittlungseinheit (5) ausgebildet ist, die in der Spule (4) erzeugt Induktionsspannung (Uₑ) zu ermitteln,
- eine Vergleichseinheit (6), wobei die Vergleichseinheit (6) ausgebildet ist, ein Vergleichen der Induktionsspannung (Uₑ) mit einer Referenzspannung (U_{R}) durchzuführen und
- eine Kontrolleinheit (7), wobei die Kontrolleinheit (7) ausgebildet ist, eine Deaktivierung und Aktivierung der Sensorknoten (3) des Sensornetzes (2) in Abhängigkeit des Vergleichens durchzuführen.

10. Sensornetz (2) nach Anspruch 9 zur Durchführung eines Verfahren nach einem der Ansprüche 1 bis 8.

11. Sensornetz (2) nach einem der Ansprüche 9 oder 10,
**wobei** die Sensorknoten (3) einen elektrischen Energiespeicher aufweisen.

12. Sensornetz (2) nach einem der Ansprüche 9 bis 11,
**wobei** das technische System (1) Maschinen aufweist, wobei die Sensorknoten (3) physikalische Größen der Maschinen erfassen.

13. Sensornetz (2) nach Anspruch 12,
**wobei** die physikalischen Größen Temperatur, Vibration, Druck und / oder Feuchtigkeit beinhalten.
